# EUROPEAN PATENT APPLICATION

(11) **EP 1 313 156 A2**
(43) Date of publication of application: **21.05.2003**
(21) Application number: 02023208.8
(22) Date of filing: 16.10.2002
(51) Int. Cl.: H01M 2/20

(54) **Assembled battery**

(30) Priority: 14.11.2001 JP 2001348755
(71) Applicant: NISSAN MOTOR CO., LTD., Yokohama-shi Kanagawa-ken (JP)
(72) Inventor: Watanabe, Kyoichi, Yokosuka-shi, Kanagawa-ken (JP); Horie, Hideaki, Yokosuka-shi, Kanagawa-ken (JP)
(74) Representative: Weber, Joachim, Dr.

(57) **Abstract**

In an assembled battery including at least two unit cells joined therein, at least one bus bar is provided in a joining region for joining the unit cells in series. The joined unit cells are accommodated into a size of the assembled battery in a final state by deforming the bus bar connecting between tabs provided on terminals of the unit cells.

## Description

### BACKGROUND OF THE INVENTION

### 1. Field of the Invention

The present invention relates to an assembled battery constituted by combining a plurality of secondary battery single cells, and specifically, to an assembled battery which is constituted by combining small-scale secondary cells, and can be publicly used as a battery for driving the motor of an electric vehicle or the like.

### 2. Description of the Related Art

In recent years, control of carbon dioxide emissions has been sought in a background of a growing environmental protection movement. In such circumstances, in order to promote the introduction of an electric vehicle (EV), a hybrid electric vehicle (HEV), and a fuel cell vehicle (FCV) in place of a vehicle using fossil fuels such as a gasoline-powered vehicle, automobile companies have been developing a battery for the driving motor, which has a key for practical application thereof. In such an application, a rechargeable secondary battery is used. In applications requiring high output and high energy density, such as the motor drive battery of the EV, the HEV, or the FCV, in practice, a single large-scaled battery cannot be manufactured. Therefore, an assembled battery constituted by connecting a plurality of cells in series has been generally used.

However, in such a method, the capacity of each cell needs to be made very large, and a specialized production line needs to be provided for production. Particularly, in the assembled battery for the EV or the like requiring a large capacity, each cell is very heavy, so that the cells are difficult to handle.

It is conceived that a number of small-scaled cells, which are easy to handle (hereinafter, referred to as a unit cell) are connected to be used in applications of the EV, the HEV, and the FCV. Alternatively, it is conceived when a lithium ion secondary battery of high output and high energy density is used as an assembled battery for vehicles for charge and discharge, an assembled battery, in which each group having a plurality of unit cells connected in parallel are connected in series, is used. Thus, an assembled battery obtains a voltage of 400 V as a whole. In order to make a 12 V or a 42 V battery for vehicles to have higher performance, a more compact size, and lower costs, the utilization of a consumer lithium ion battery becomes favorable.

The assembled battery for the electric vehicle is always used in a state where vibration is applied thereto. Therefore, vibration resistance is required such that no trouble occurs inside of the unit cell. Such troubles include structure breakdown such as breakage of collectors or breakage of collector welding portions, breakage of a connecting tab for electrically connecting the unit cells, and the like.

As a prior art for the assembled battery having a plurality of unit cells connected with each other as described above, there have been disclosed a technology in Japanese Patent Application Laid-Open No. 9-259938 (1997) and in Japanese Patent Application Laid-Open No. 2001-110379. These publications disclose methods of installing an assembled battery by fixing the unit cells to an outer case for securing strength and then by connecting terminals among the respective unit cells with bus bars or the like.

Meanwhile, another technology in the prior art has been disclosed in Japanese Utility Model Application Laid-Open No. 6-70157 (1994). According to this publication, unit cells accommodated in metallic containers are used therein. The publication discloses a method of installing an assembled battery by providing a mechanical joint on each of the unit cells as a conductor penetrating an outer wall of a metallic container, and joining the mechanical joints together by welding.

### SUMMARY OF THE INVENTION

According to the above-mentioned assembled batteries and the installing methods thereof, the unit cells themselves have sufficient rigidity. The rigid unit cells are accommodated in casings and then connected together with bus bars or the like. Therefore, the casing in the prior art is hardly applicable to a case where a package of a cell is not of a rigid type, particularly in a case of a cell adopting a polymer-metal composite film as a package thereof, because the cell itself does not possess rigidity.

In the technology disclosed in Japanese Utility Model Application Laid-Open No. 6-70157 (1994), it is necessary to perform welding for linking the unit cells together by use of a welding machine. In other words, gaps between the unit cells are reduced to form the assembled battery as compact as possible. Nevertheless, it has been difficult to secure welding spaces in any case by use of spot welding upon bonding a tab and bus bar or by use of other bonding methods such as ultrasonic vibration welding. Assuming that a special welding machine requiring small welding spaces as disclosed in Japanese Patent Application Laid-Open No. 2001-138051 is used for welding, fabrication by use of special machinery involves the slowdown of production lines and increases in machinery costs. Since a laminated-package cell adopting a polymer-metal composite film as a package has a thickness of several millimeters, it has been difficult to fabricate laminated-package cells efficiently.

The present invention has been made in consideration of the foregoing problems. The object thereof is to provide an assembled battery having a plurality of unit cells combined, which is capable of exerting stable performances while securing the ease of fabricating the assembled battery, and avoiding the occurrence of structure breakdown or breakage of a connection tab even when vibration is applied thereto, and also to provide a method of installing the assembled battery.

The first aspect of the present invention provides an assembled battery, comprising: a plurality of unit cells; tabs provided on terminals of the unit cells; and a bus bar for connecting between the tabs, the bus bar being provided on a joining region for joining the unit cells in series, wherein the joined unit cells are accommodated into a final size of the assembled battery by deforming any of the bus bar and the tabs, or parts thereof.

The second aspect of the present invention provides a method for installing an assembled battery, comprising: preparing a plurality of unit cells, tabs provided on terminals of the unit cells, and a bus bar for connecting between the tabs, the bus bar being provided on a joining region for joining the unit cells in series; joining the tabs and the bus bar as larger than a maximum size of the assembled battery in a final state; reducing an entire size of unit cell groups being joined together into a size of the assembled battery in the final state, by deforming any of the bus bar and the tabs, or parts thereof; and installing the joined unit cell groups into an outer case.

### BRIEF DESCRIPTION OF THE DRAWINGS

The invention will now be described with reference to the accompany drawings wherein;

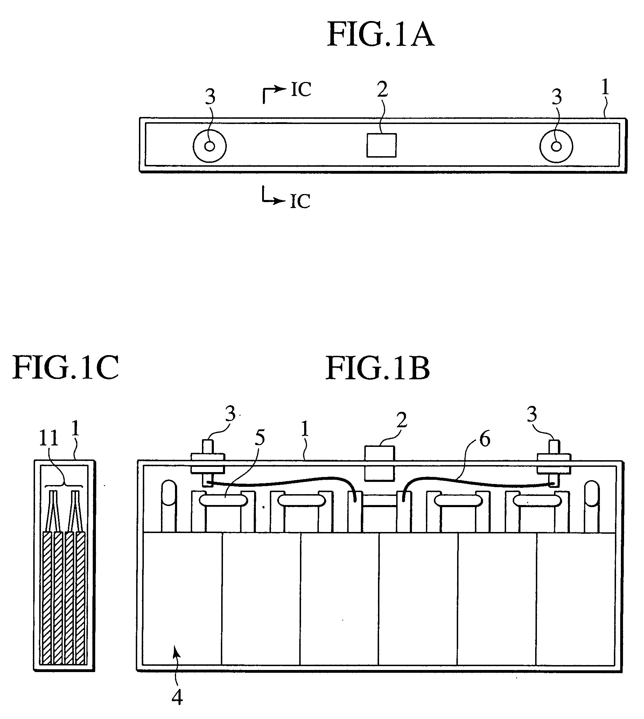

FIG. 1A is a top plan view showing an assembled battery structure of embodiment 1;
FIG. 1B is an end view showing the assembled battery structure of embodiment 1;
FIG. 1C is a sectional view showing the assembled battery structure of embodiment 1 taken along a line IC-IC in FIG. 1A;
FIG. 2A is a top plan view showing one of the unit cells of embodiment 1;
FIG. 2B is a side view showing one of the unit cells of embodiment 1;
FIG. 3A is a schematic perspective view showing the assembled battery structure of embodiment 1;
FIG. 3B is a schematic perspective view showing the assembled battery structure of embodiment 1;
FIG. 4A is a schematic view showing a final assembled battery size of the assembled battery structure of embodiment 1;
FIG. 4B is a schematic view showing a joint structure of the assembled battery structure of embodiment 1;
FIG. 5A is a view showing a bus bar of embodiment of the present invention, which changes the modulus of a bending elasticity;
FIG. 5B is a view showing a bus bar of embodiment of the present invention, which joints rotatably;
FIG. 5C is a view showing a bus bar of embodiment of the present invention, which uses a laminated composite material;
FIG. 6A is a view showing a structure of the bus bar of embodiment of the present invention;
FIG. 6B is a view showing a structure of the bus bar of embodiment of the present invention;
FIG. 6C is an enlarged view showing a joining region of embodiment of the present invention;
FIG. 6D is a schematic view showing the bus bar of embodiment of the present invention;
FIG. 7A is a schematic view showing a final assembled battery size of the assembled battery structure of embodiment 2;
FIG. 7B is a schematic view showing a joint structure of the assembled battery structure of embodiment 2;
FIG. 8A is a schematic view showing a final assembled battery size of the assembled battery structure of embodiment 3;
FIG. 8B is a schematic view showing a joint structure of the assembled battery structure of embodiment 3;
FIG. 8C is a schematic view showing a joint structure of the assembled battery structure of embodiment 3;
FIG. 9A is a schematic view showing a final assembled battery size of the assembled battery structure of embodiment 4;
FIG. 9B is a schematic view showing a joint structure of the assembled battery structure of embodiment 4;
FIG. 10A is a top plan view of an assembled battery structure of embodiment 5;
FIG. 10B is an end view of the assembled battery structure of embodiment 5;
FIG. 10C is a sectional view of the assembled battery structure of embodiment 5 taken along a line XC-XC in FIG. 10A;
FIG. 11A is a top plan view of one of the unit cells of embodiment 5;
FIG. 11B is a side view of one of the unit cells of embodiment 5;
FIG. 12A is a schematic perspective view of the assembled battery structure of embodiment 5;
FIG. 12B is a schematic perspective view of the assembled battery structure of embodiment 5;
FIG. 13A is a schematic view showing a final assembled battery size of the assembled battery structure of embodiment 5;
FIG. 13B is a schematic view showing a joint structure of the assembled battery structure of embodiment 5;
FIG. 14A is a schematic view showing a final assembled battery size of the assembled battery structure of embodiment 6; and
FIG. 14B is a schematic view showing a joint structure of the assembled battery structure of embodiment 6.

### DETAILED DESCRIPTION OF THE PREFERED EMBODIMENT

To describe the present invention more in detail, preferred embodiments of the present invention will be explained with reference to the drawings below.

### (Embodiment 1)

The structure of the assembled battery will be described below. Reference numeral 1 denotes a supporter, reference numeral 2 denotes a cell controller for controlling a charge and discharge state of each of unit cells 4, reference numeral 3 denotes external terminals, reference numeral 4 denotes laminate-packed unit cells, reference numeral 5 denotes bus bars for connecting the unit cells 4, and reference numeral 6 denotes connection leads for connecting terminals of the unit cells to the external terminals.

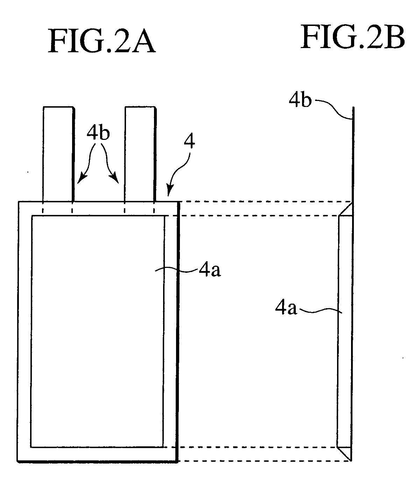

As shown in FIG 2A and FIG. 2B, the unit cell 4 to be assembled into the assembled battery is constituted by a laminate-packed sheet type cell body 4a, and two tabs 4b provided on the right and left ends of the cell body 4a for serving as a positive electrode and a negative electrode, respectively.

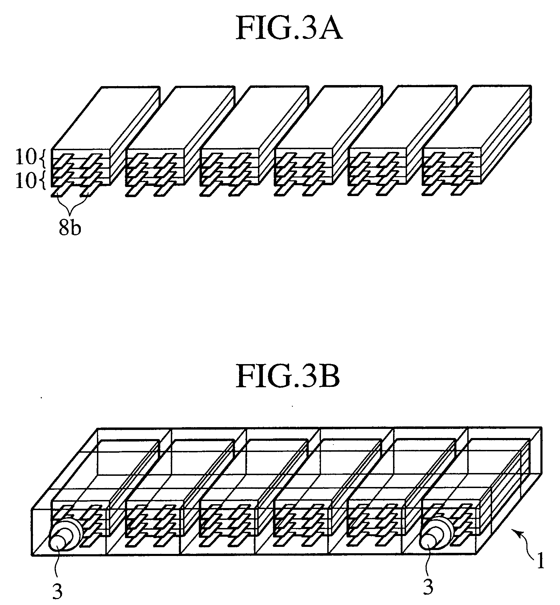

As shown in FIG. 3A and FIG 3B, each of unit cell groups 10 is constituted by the two unit cells 4 connected with each other in parallel, and twelve unit cell groups 10 are connected in series by connecting the tabs 4b by the bus bars 5. The unit cells 4 are thereby accommodated in the supporter 1 so as to be arranged in four columns by six rows. In this event, two length types of bus bars 5a and 5b are used as the bus bars 5. Accordingly, it is possible to minimize the size of the assembly battery upon integrating a final assembled battery size.

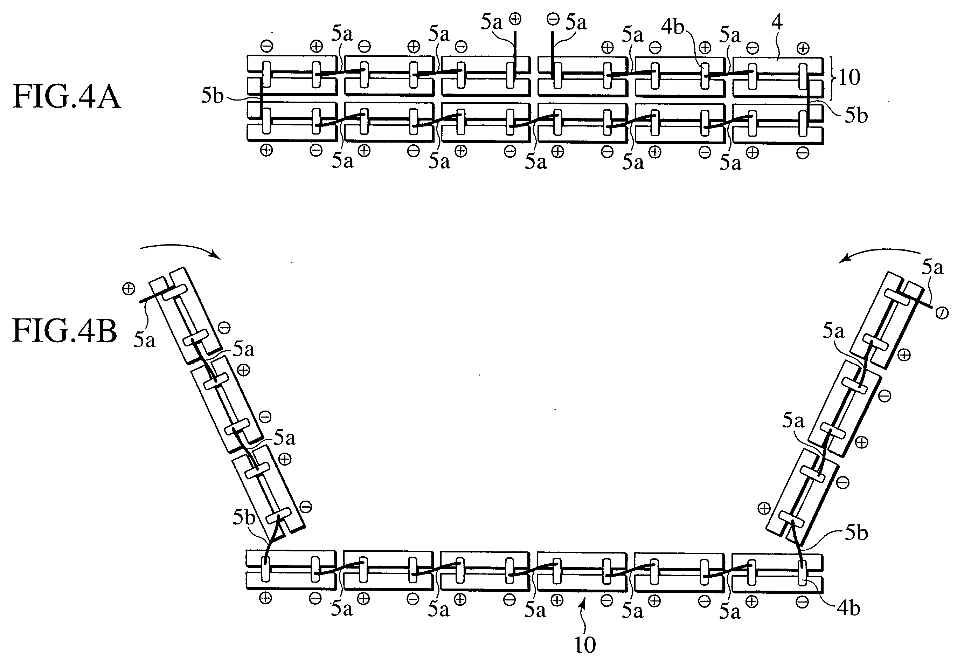

FIG. 4A and FIG. 4B are schematic views showing a method of installing the assembled battery according to embodiment 1. To begin with, the tabs 4b of the unit cells 4 and bus bars 5 are joined as larger than the maximum size of the final assembled battery. Then, part or all of the joining regions of the joined unit cell groups are folded so as to reduce the entire size of the joined unit cell groups as the final assembled battery size. Thereafter, the assembled battery reduced in size is installed in the supporter 1.

As shown in FIG. 4B, twelve unit cell groups 10 are arranged and the respective tabs 4b thereof are connected in series by the bus bars 5. Then, the bus bars 5 connecting the third unit cell groups and the fourth unit cell groups from both right and left ends are severally deformed by folding inward as illustrated by arrows in the drawing. In this way, the set of unit cell groups 10 are integrated into the final assembled battery size as shown in FIG. 4A. As the bus bars 5 are connected in the state where the unit cells are unfolded as larger than the maximum size of the final assembled battery, it is possible to secure welding spaces if spot welding or other bonding methods such as ultrasonic vibration welding are used upon connecting the tabs 4b and the bus bars 5. In this way, it is possible to improve productivity.

Embodiment 1 constitutes a circular shape formed by deformation of the bus bars 5b at the same distances from the right and left ends and by connection of the tabs 4 and the bus bars 5. Although it is required to fold two positions of the bus bars 5, the circular shape can obtain resistance against vibration or impact from the outside. Therefore, it is possible to improve the reliability of the assembled battery.

In particular, when the thickness of the cell is of several millimeters as in the case of the laminate-packed sheet type cell using a polymer-metal film as a package, it is extremely difficult to connect the tabs 4b and the bus bars 5 after integration as shown in FIG. 4A. On the contrary, if the bus bars 5 are joined in the unfolded state and then folded for integration, it is possible to join the bus bars easily and to realize the final assembled battery in the compact size. Moreover, by use of the sheet type cells, it is possible to secure easiness of deformation from the unfolded state to the integrated state, which is attributed to the thinness of the tabs 4b. As a result, it is possible to form the assembled battery in a compact shape because the cells themselves do not allow wasted spaces. A sheet type cell has an outer wall made of a polymer such as nylon, unlike a canned cell including a metallic outer tube. Therefore, the dynamic spring constant of the unit cell is low, meanwhile, efficiency of vibration reduction is high. In terms of heat radiation of the assembled battery, the thickness of the sheet type cell is preferably set within 10 mm so as not to accumulate heat inside the cell. Incidentally, the necessary capacity cannot be obtained from a cell with a thickness of 1 mm or below even if a positive electrode and a negative electrode thereof are made thin. In this context, such a cell does not deem to be economically efficient, but no particular limitation is given.

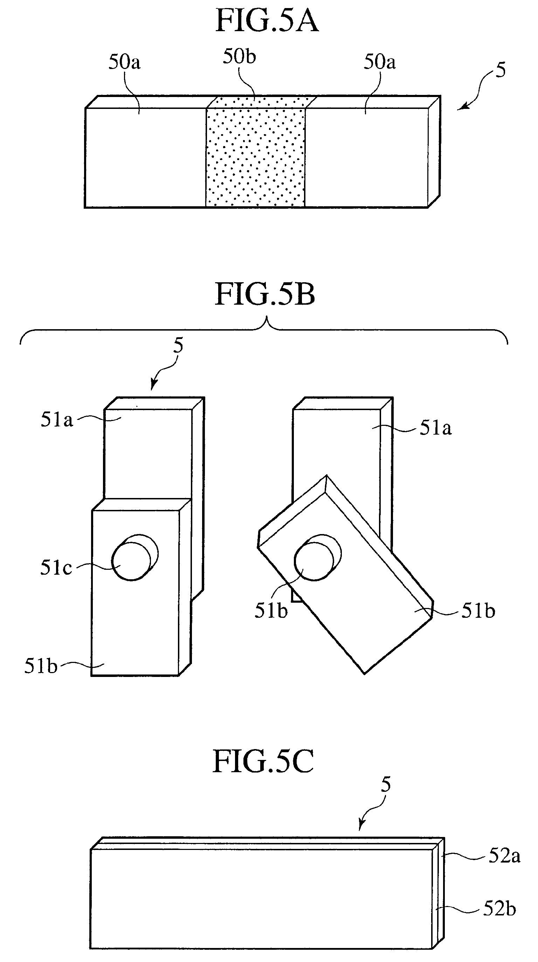

FIG. 5A, FIG. 5B and FIG. 5C are views showing a folding part of the bus bar 5. As shown in FIG. 5A, both ends of the bus bar 5 may be designed as high bending elasticity regions 50a and a central part thereof may be designed as a low bending elasticity region 50b. In this way, the bus bar 5 can be bent easily owing to the low bending elasticity region 50b while securing the rigidity of a portion bonding the tab 4b and the bus bar 5. Moreover, it is possible to integrate into the shape of the final assembled battery easily after bonding. Eventually, various effects such as the improvement of productivity, reduction in residual stress, absorption of external vibration or the like can be obtained.

As shown in FIG. 5B, it is also possible to constitute the bus bar 5 by a first bus bar 51a, a second bus bar 51b and a supporter 51c for rotatably joining the first bus bar 51a and the second bus bar 51b. It is also possible to join the tab 4b and the bus bar 5 so that a joined part thereof is made rotatable. If the tab 4b and the bus bar 5 are joined rotatably or in a hinged shape, it is easier to deform the unfolded state into the integrated state.

As shown in FIG. 5C, a laminated composite material formed by the bonding of two types of plastically deformable materials 52a and 52b may be used as the bus bar 5. The plastically deformable materials include copper, nickel, aluminum and alloys thereof. However, it is not the intention of the present invention to limit the plastically deformable materials to the above-mentioned materials in particular, because any other metal can be used therein as long as the metal can achieve the object of the present invention.

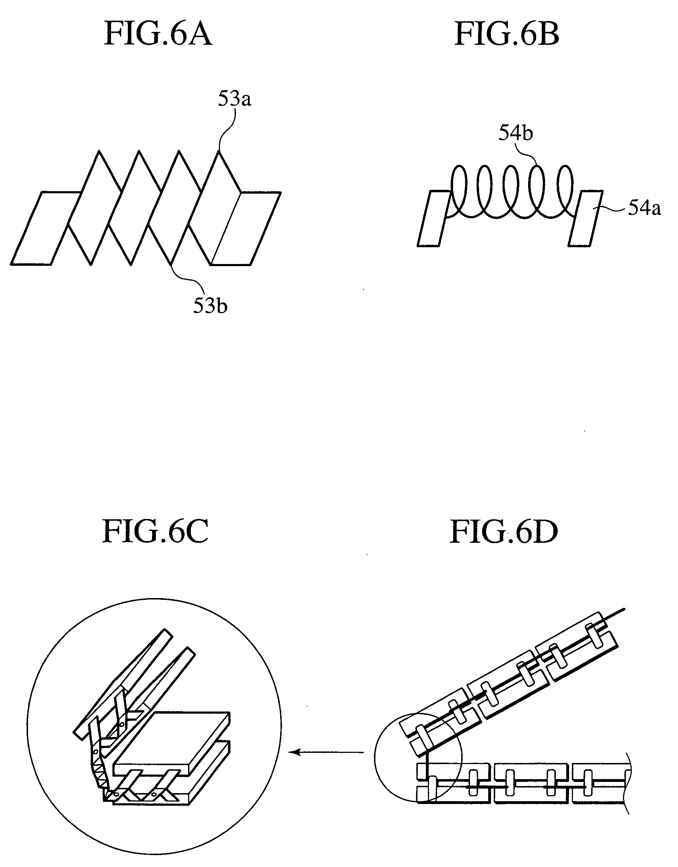

FIG. 6A, FIG. 6B, FIG. 6C and FIG. 6D are views showing the bus bars 5 having elastically deformable shapes. FIG. 6D shows a schematic view of the joining region of the bus bar, and FIG. 6C is an enlarged view of the joining region in FIG. 6D. As shown in FIG. 6A, the bus bar 5 may be provided with ridges 53a and troughs 53b and thereby formed as bellows. Otherwise, as shown in FIG 6B, the bus bar 5 may be constituted by spring supporters 54a and a spring 54b. Accordingly, it is possible to deform the unfolded state into the integrated state more easily. As described previously, copper, nickel, aluminum or the like is preferred as the material of these bus bars 5. However, again, it is not the intention of the present invention to limit the materials of the bus bars to the above-mentioned materials in particular.

It is desirable that a surface area of the bus bars 5 is preferably in a range from about twice to ten times of a surface area of the tabs 4b. Specifically, since the tabs 4b generate heat upon the charge or discharge of electricity, it is effective to utilize the bus bars 5 as heat sinks for absorbing the generated heat. Upon using the bus bars 5 as the heat sinks, the bus bars 5 cannot absorb the generated heat adequately if the surface area of the bus bars is less than twice the surface area of the tabs 4b. On the contrary, if the surface area of the bus bars 5 is larger than ten times the surface area of the tabs 4b, then the aggregate weight of the bus bars 5 is too heavy. In that case, the system constituted by the tabs 4b and the bus bars 5 may be jolted by external vibration. Therefore, there is a risk that durability of the tabs and the like is degraded.

Whereas FIG. 5A, FIG. 5B and FIG. 5C explain the folding part of the bus bar 5, it is needless to say that the bus bars 5 are not the only components to be deformed, but the object of the present invention can be also achieved by folding the tabs 4b instead. Moreover, it is also possible to reduce stress applied to the tabs upon deformation by means of bonding the deformed bus bars 5 to the tabs 4b previously. Furthermore, it is also possible to prepare several types of bus bars of different shapes in advance for connecting the unit cell groups.

### (Embodiment 2)

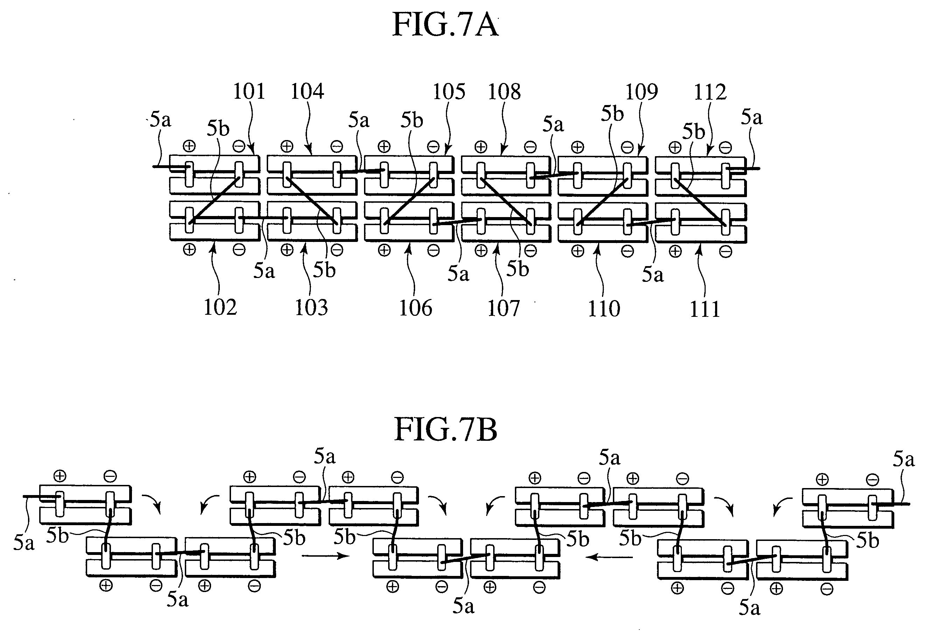

FIG. 7A and FIG. 7B are schematic views showing a method of installing an assembled battery according to embodiment 2. To begin with, tabs 4b of unit cells 4 and bus bars 5 are joined as larger than the maximum size of a final assembled battery. Then, part or all of the joining regions of the joined unit cell groups are folded so as to reduce the entire size of the joined unit cell groups into the final assembled battery size. Thereafter, the assembled battery reduced in size is installed in the supporter 1. Since the basic constitution is similar to embodiment 1, only different points will be described.

As shown in FIG. 7B, two types of bus bars 5a and 5b are also used for connection in embodiment 2. A positive electrode of a unit cell group 101, which is constituted by unit cells 4 connected in parallel, is connected to a terminal 3, and a negative electrode of the unit cell group 101 is connected to a positive electrode of a unit cell group 102 with the bus bar 5b. In addition, a negative electrode of the unit cell group 102 is connected to a positive electrode of a unit cell group 103 with the bus bar 5a. In this way, similar connection is repeated concerning respective unit cell groups 104 to 112. Then, the bus bars 5b are folded severally in directions as illustrated with arrows in FIG. 7B, so that the unit cell groups are integrated and formed into the final assembled battery size as shown in FIG. 7A. Thereafter, the assembled battery reduced in size is installed inside the supporter 1. In this event, six pieces of the bus bars 5b are folded. Accordingly, it is possible to obtain operational effects similar to embodiment 1.

### (Embodiment 3)

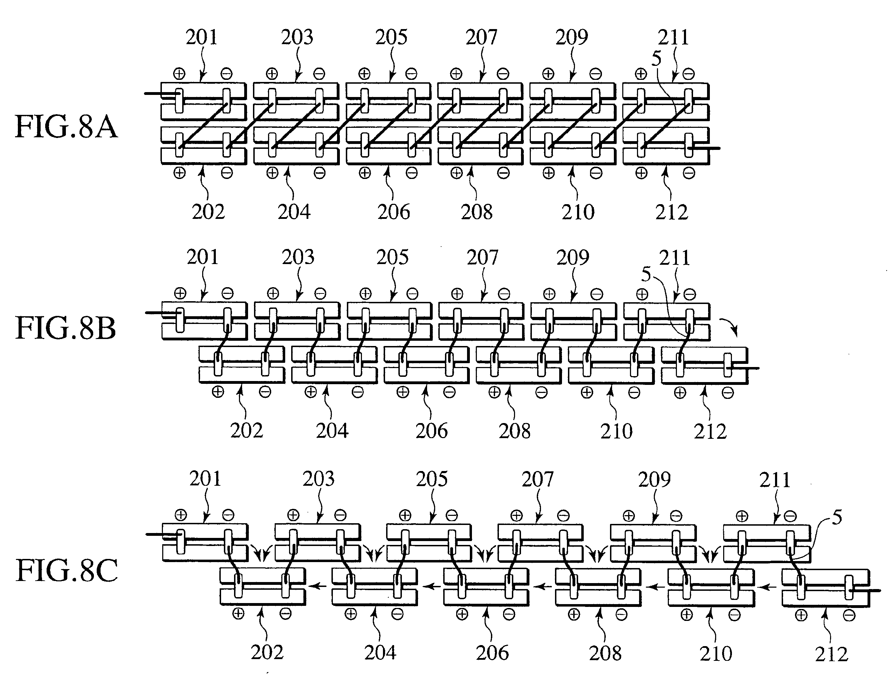

FIG. 8A, FIG. 8B and FIG. 8C are schematic views showing a method of installing an assembled battery according to embodiment 3. To begin with, tabs 4b of unit cells 4 and bus bars 5 are joined as larger than the maximum size of a final assembled battery. Then, part or all of the joining regions of the joined unit cell groups are folded so as to reduce the entire size of the joined unit cell groups into the final assembled battery size. Thereafter, the assembled battery reduced in size is installed in the supporter 1. Since the basic constitution is similar to embodiment 1, only different points will be described.

As shown in FIG. 8C, one type of bus bar 5 is used for connection in embodiment 3. A positive electrode of a unit cell group 201, which is constituted by unit cells 4 connected in parallel, is connected to a terminal 3, and a negative electrode of the unit cell group 201 is connected to a positive electrode of a unit cell group 202 with the bus bar 5. In addition, a negative electrode of the unit cell group 202 is connected to a positive electrode of a unit cell group 203 with the bus bar 5. In this way, similar connection is repeated concerning respective unit cell groups 204 to 212. Then, the bus bars 5 are folded severally in directions as illustrated with arrows in FIG. 8B, so that the unit cell groups are integrated and formed into the final assembled battery size as shown in FIG. 8A. Thereafter, the assembled battery reduced in size is installed inside the supporter 1. In this event, eleven pieces of the bus bars 5 are folded. In this way, it is possible to obtain operational effects similar to embodiments 1 and 2.

### (Embodiment 4)

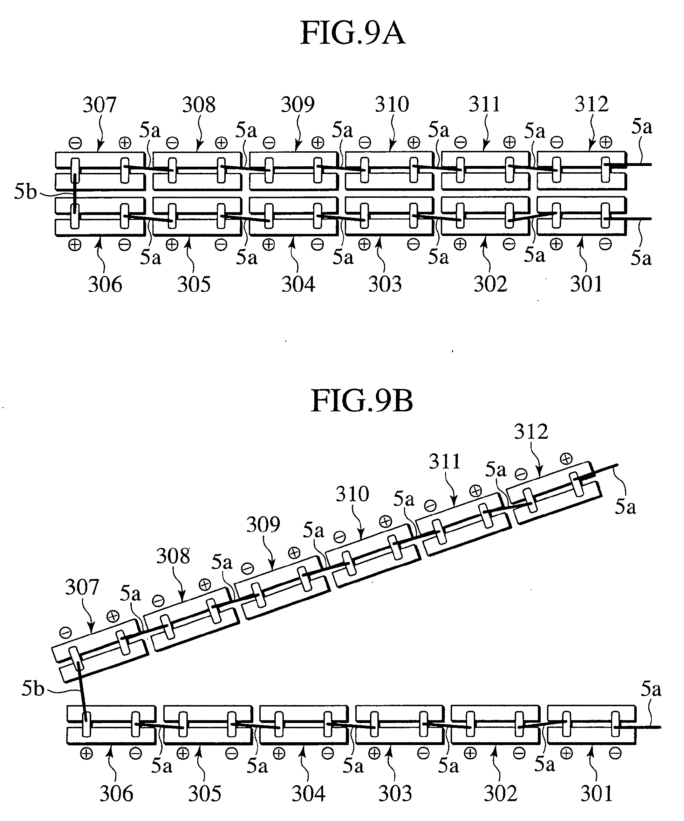

FIG. 9A and FIG. 9B are schematic views showing a method of installing an assembled battery according to embodiment 4. To begin with, tabs 4b of unit cells 4 and bus bars 5 are joined as larger than the maximum size of a final assembled battery. Then, part or all of the joining regions of the joined unit cell groups are folded so as to reduce the entire size of the joined unit cell groups into the final assembled battery size. Thereafter, the assembled battery reduced in size is installed in the supporter 1. Since the basic constitution is similar to embodiment 1, only different points will be described.

As shown in FIG. 9A, two types of bus bars 5a and 5b are used for connection in embodiment 4. A negative electrode of a unit cell group 301, which is constituted by unit cells 4 connected in parallel, is connected to a terminal 3, and unit cell groups 301, 302, 303, 304, 305 and a negative electrode of the unit cell group 306 are connected in series with the bus bars 5a. Then a positive electrode of the unit cell group 306 is connected to a negative electrode of a unit cell group 307 with the bus bar 5b. In addition, a positive electrode of the unit cell group 307 and unit cell groups 308, 309, 310, 311 and 312 are connected in series with the bus bars 5a. Then, the bus bar 5b is folded in a direction as illustrated with an arrows in FIG. 9B, so that the unit cell groups are integrated and formed into the final assembled battery size as shown in FIG. 9A. Thereafter, the assembled battery reduced in size is installed inside the supporter 1. In this event, one piece of the bus bar 5b is folded. In this way, it is possible to obtain operational effects similar to embodiments 1 to 3. Moreover, it is also possible to improve productivity because the bus bars 5 which are subject to folding are minimized.

### (Embodiment 5)

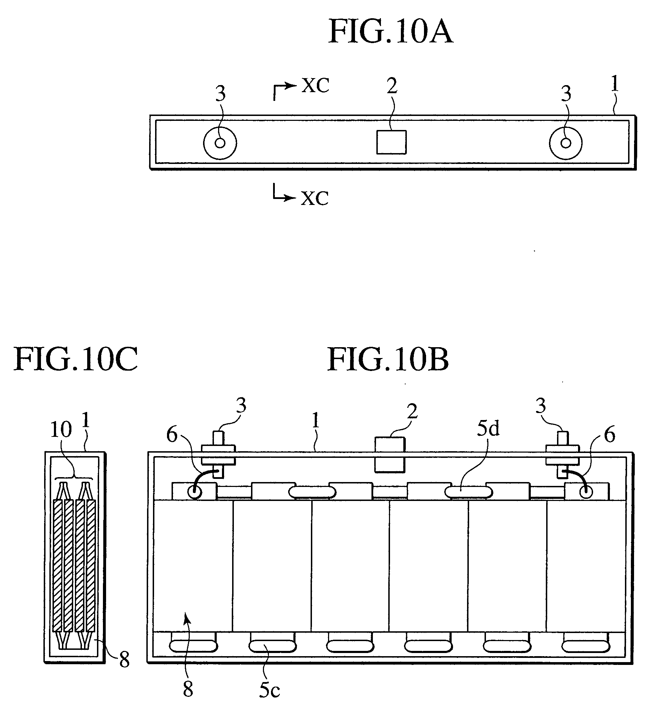

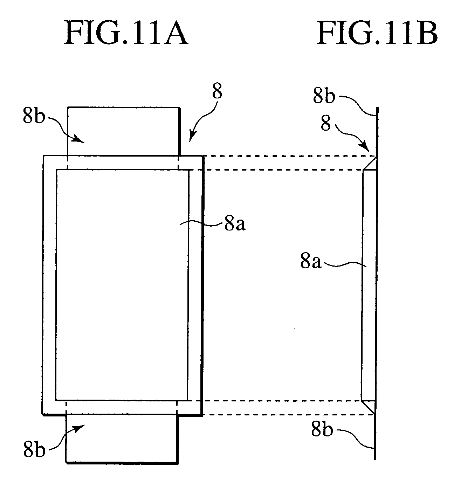

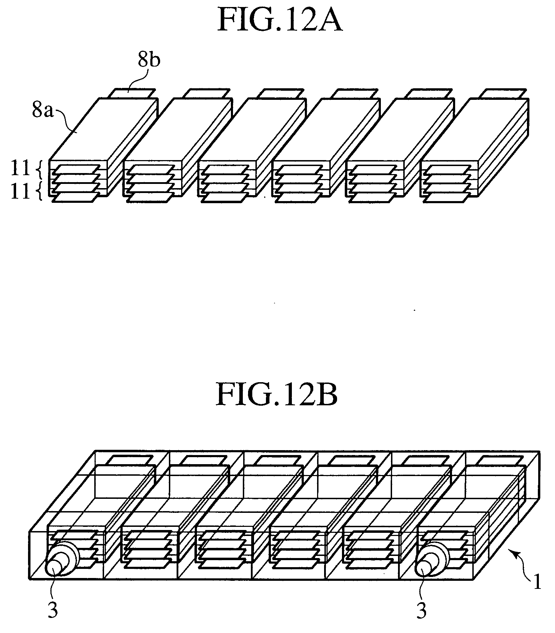

FIG. 10A is a top plan view showing an assembled battery of embodiment 5, FIG. 10B is an end view showing the same, and FIG. 10C is a sectional view taken along a line XC-XC in FIG. 10A. Since the basic constitution is similar to that of embodiment 1, only different points will be described. Reference numeral 8 denotes a laminate-packed unit cell. As shown in Fig. 11A and Fig. 11B, each of the unit cells 8 is constituted by a laminate-packed sheet type cell body 8a, and two tabs 8b provided on front and back ends of the cell body 8a to serve as a positive electrode and a negative electrode, respectively. As shown in schematic perspective views of the assembled battery in FIG. 12A and FIG. 12B, each of unit cell groups 11 is constituted by the two unit cells 8 connected with each other in parallel, and twelve unit cell groups 11 are connected in series by connecting the tabs 8b by means of bus bars 5 (5c and 5d). The unit cells 8 are thereby accommodated in the supporter 1 so as to be arranged in four columns by six rows.

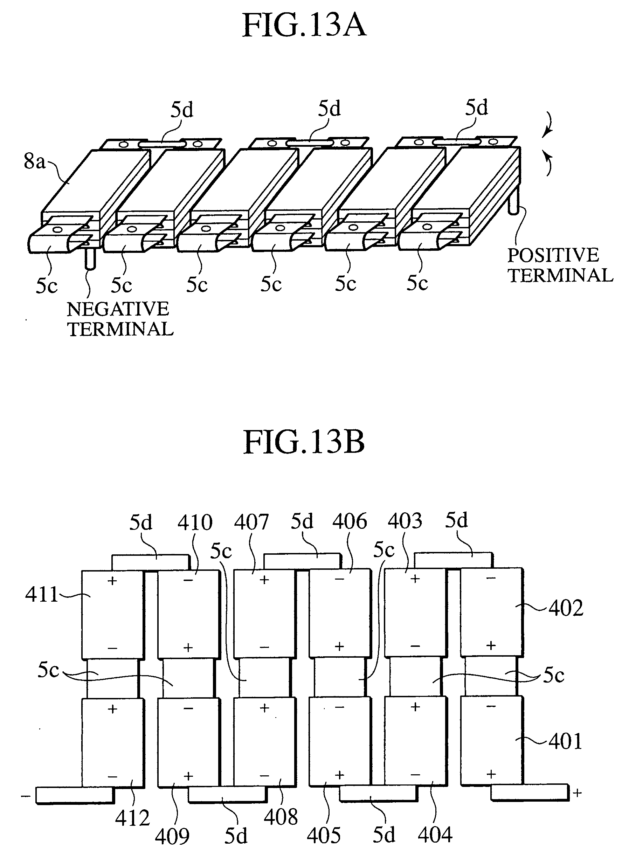

FIG. 13A and FIG. 13B are schematic views showing a method of installing the assembled battery according to embodiment 5. To begin with, tabs 8b of the unit cells 8 and the bus bars 5 are joined as larger than the maximum size of a final assembled battery. Then, part or all of the joining regions of the joined unit cell groups are folded so as to reduce the entire size of the joined unit cell groups into the final assembled battery size. Thereafter, the assembled battery reduced in size is installed in the supporter 1.

As shown in FIG. 13B, the unit cell groups are arranged in parallel in two rows each including six unit cell groups (the row including unit cell groups 401, 404, 405, 408, 409 and 412, and the row including unit cell groups 402, 403, 406, 407, 410 and 411), and the respective tabs 8b are connected in series with the bus bars 5c. A positive electrode of the unit cell group 401 is connected to the terminal 3 and a negative electrode of the unit cell group 402 is connected to a positive electrode of the unit cell group 403 with the bus bar 5d. Similar connection is performed regarding other unit cell groups. Then, the bus bars 5c located between the two rows in FIG. 13B are severally deformed so that the two rows are overlapped by folding. Accordingly, the unit cell groups are integrated into the final assembled battery size as shown in FIG. 13A. In this way, it is possible to obtain operational effects similar to embodiment 1.

### (Embodiment 6)

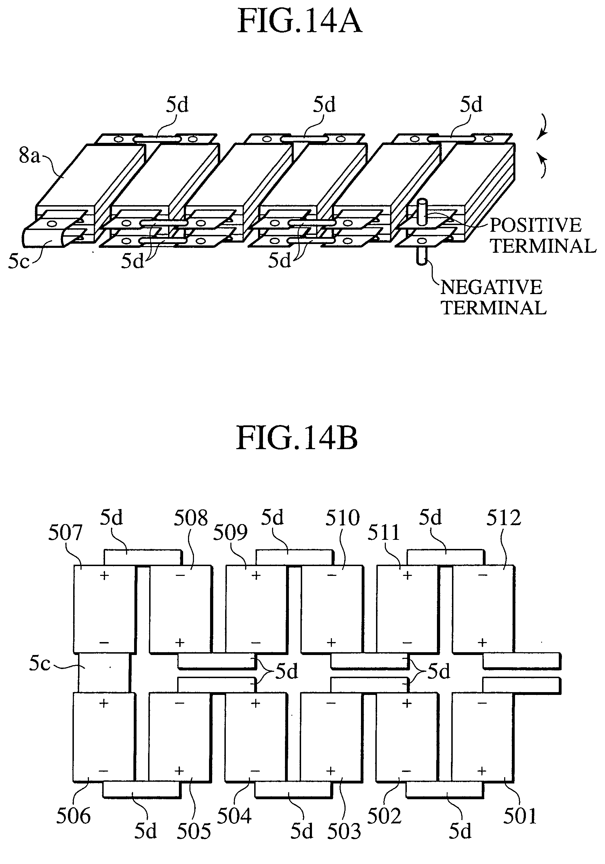

FIG. 14A and FIG. 14B are schematic views showing a method of installing an assembled battery according to embodiment 6. To begin with, tabs 8b of unit cells 8 and bus bars 5 are joined as larger than the maximum size of a final assembled battery. Then, part or all of the joining regions of the joined unit cell groups are folded so as to reduce the entire size of the joined unit cell groups into the final assembled battery size. Thereafter, the assembled battery reduced in size is installed in the supporter 1. Since the basic constitution is similar to embodiment 5, only different points will be described.

As shown in FIG. 14B, the unit cell groups are arranged in parallel in two rows each including six unit cell groups (the row including unit cell groups 501, 502, 503, 504, 505 and 506, and the row including unit cell groups 507, 508, 509, 510, 511 and 512), and the respective tabs 8b are connected in series by means of the bus bars 5d. Moreover, a positive electrode of the unit cell group 506 is connected to a negative electrode of the unit cell group 507 by the bus bar 5c. Then, the bus bar 5c located between the two rows in FIG. 14B is deformed so that the two rows are overlapped by folding. Accordingly, the unit cell groups are integrated into the final assembled battery size as shown in FIG. 14A. In this way, it is possible to obtain operational effects similar to embodiment 1.

As described above, in the methods of installing an assembled battery according to embodiments 1 to 6, the tabs of the unit cells and the bus bars are first joined as larger than the maximum size of a final assembled battery. Then, part or all of the joining regions of the joined unit cell groups are folded by deforming the tabs or the bus bars in the maximum length direction, in other words, along the longest unit cell group. Accordingly, the entire size of the joined unit cell groups is reduced into the final assembled battery size and the assembled battery is installed in the outer case. In this way, it is possible to obtain the operational effects as described above.

In the process of fabricating an assembled battery by incorporating unit cells according to the present invention, the assembled battery can be fabricated by joining all the unit cells in an unfolded slate outside an outer case of the assembled battery, then by compactly deforming the set of the unit cells from a joined state into an integrated state, by inserting the set of the unit cells into the outer case of the assembled battery and by connecting the terminals and the like. According to the above-described installing method, it is possible to fabricate the assembled battery by joining easily thin unit cells, which has been particularly difficult to achieve in the prior art.

The assembled battery of the present invention can secure sufficient vibration resistance, shock resistance and heat resistance. Therefore, the assembled battery can be adapted effectively to an automobile.

Now, description will be made in detail based on examples of the present invention, but the present invention is not limited to the examples.

### (Example 1)

An assembled battery in an integrated state as shown in FIG. 4A was fabricated by using a constitution similar to the constitution described in embodiment 1 and by folding the bus bars in two positions. Such a structure of the assembled battery is referred to as a joint structure 1. The size in the unfolded state thereof was set twice as large as the size at the final stage of the assembled battery having the joint structure 1. Plastically deformable copper was used for the bus bars.

### (Example 2)

An assembled battery in an integrated state as shown in FIG. 7A was fabricated by using a constitution similar to the constitution described in embodiment 2 and by folding the bus bars in six positions. Such a structure of the assembled battery is referred to as a joint structure 2. The size in the unfolded state thereof was set one and a half time as large as the size at the final stage of the assembled battery having the joint structure 2. Plastically deformable copper was used for the bus bars.

### (Example 3)

An assembled battery in an integrated state as shown in FIG. 8A was fabricated by using a constitution similar to the constitution described in embodiment 3 and by folding the bus bars in eleven positions. Such a structure of the assembled battery is referred to as a joint structure 3. The size in the unfolded state thereof was set 1.3 limes as large as the size at the final stage of the assembled battery having the joint structure 3. Plastically deformable copper was used for the bus bars.

### (Example 4)

An assembled battery in an integrated state as shown in FIG. 9A was fabricated by using a constitution similar to the constitution described in embodiment 4 and by folding the bus bars in one position. Such a structure of the assembled battery is referred to as a joint structure 4. The size in the unfolded state thereof was set twice as large as the size at the final stage of the assembled battery having the joint structure 4. Plastically deformable copper was used for the bus bars.

### (Example 5)

An assembled battery in an integrated state as shown in FIG. 13A was fabricated by using a constitution similar to the constitution described in embodiment 5 and by folding the bus bars in six positions. Such a structure of the assembled battery is referred to as a joint structure 5. The size in the unfolded state thereof was set twice as large as the size at the final stage of the assembled battery having the joint structure 5. Plastically deformable copper was used for the bus bars.

### (Example 6)

An assembled battery in an integrated state as shown in FIG. 14A was fabricated by using a constitution similar to the constitution described in embodiment 6 and by folding the bus bars in one position. Such a structure of the assembled battery is referred to as a joint structure 6. The size in the unfolded state thereof was set twice as large as the size at the final stage of the assembled battery having the joint structure 6. Plastically deformable copper was used for the bus bars.

### (Example 7)

An assembled battery was fabricated as identical to embodiment 4, except that the bus bars were made rotatably as shown in FIG. 5B.

### (Example 8)

An assembled battery was fabricated as identical to embodiment 5, except that the bus bars were made of a composite material as shown in FIG. 5A having a different bending elasticity in the central part thereof.

### (Example 9)

An assembled battery was fabricated as identical to embodiment 5, except that the bus bars were made of nickel.

### (Example 10)

An assembled battery was fabricated as identical to embodiment 5, except that the bus bars were made of aluminum.

### (Example 11)

An assembled battery was fabricated as identical to embodiment 5, except that the bus bars were made of a composite material of copper and nickel as shown in FIG. 5C.

### (Example 12)

An assembled battery was fabricated as identical to embodiment 5, except that the bus bars were formed into bellows as shown in FIG. 6A.

### (Example 13)

An assembled battery was fabricated as identical to embodiment 5, except that the bus bars were formed into springs as shown in FIG. 6B.

### (Comparative example 1)

Fabrication of an assembled battery having a joint structure 3 was attempted by use of thin laminate cells. First, all unit cells were integrated into a final state and ultrasonic welding was attempted to connect bus bars and tabs of the respective unit cells. However, it was impossible to connect the bus bars and the tabs because welding spaces were not obtained.

Accordingly, as described in comparative example 1, it was impossible to connect the bus bars and the tabs once after the unit cells were integrated into the final state. On the contrary, connection of the unit cells was made industrially practicable by use of the joint structures as described in the examples 1 to 13.

The entire content of a Japanese Patent Application No. P2001-348755 with a filing date of November 14, 2001 is herein incorporated by reference.

Although the invention has been described above by reference to certain embodiments of the invention, the invention is not limited to the embodiments described above will occur to these skilled in the art, in light of the teachings. The scope of the invention is defined with reference to the following claims.

## Claims

1. An assembled battery, comprising:
a plurality of unit cells (4);
tabs (4b) provided on terminals of the unit cells (4); and
a bus bar (5) for connecting between the tabs (4b), the bus bar (5) being provided on a joining region for joining the unit cells (4) in series,
wherein the joined unit cells are accommodated into a final size of the assembled battery by deforming any of the bus bar (5) and the tabs (4b), or parts thereof.

2. An assemble battery according to claim 1,
wherein all of the tabs (4b) and the bus bar (5), or parts thereof are made of a plastically deformable material.

3. An assembled battery according to claim 1,
wherein a connecting portion of the tab (4b) and the bus bar (5) is rotatably joined.

4. An assembled battery according to claim 1,
wherein a length between the terminals of the joining region is set to a combination of multiple lengths.

5. An assembled battery according to claim 1,
wherein bending elasticity in part of the tab (4b), or in an entire portion of the bus bar (5) in a longitudinal direction, or in part of the bus bar (5) in the longitudinal direction, is made smaller than that of other portions thereof.

6. An assemble battery according to claim 1,
wherein the unit cell (4) is a thin laminate cell.

7. A method for installing an assembled battery, comprising:
preparing a plurality of unit cells (4), tabs (4b) provided on terminals of the unit cells (4), and a bus bar (5) for connecting between the tabs (4b), the bus bar (5) being provided on a joining region for joining the unit cells (4b) in series;
joining the tabs (4b) and the bus bar (5) as larger than a maximum size of the assembled battery in a final state;
reducing an entire size of unit cell groups being joined together into a size of the assembled battery in the final state, by deforming any of the bus bar (5) and the tabs (4b), or parts thereof; and
installing the joined unit cell groups into an outer case.
